(19) Europäisches Patentamt
European Patent Office
Office européen des brevets

(11) **EP 2 150 084 A2**

(12) **EUROPÄISCHE PATENTANMELDUNG**

(43) Veröffentlichungstag:
**03.02.2010 Patentblatt 2010/05**

(51) Int Cl.:
***H04W 56/00*** *(2009.01)*

(21) Anmeldenummer: **09166093.6**

(22) Anmeldetag: **22.07.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **01.08.2008   DE 102008035988**

(71) Anmelder: **Techem Energy Services GmbH**
**65760 Eschborn (DE)**

(72) Erfinder: **Matussek, Dirk**
**60318, Frankfurt am Main (DE)**

(74) Vertreter: **KEIL & SCHAAFHAUSEN**
**Patentanwälte**
**Cronstettenstraße 66**
**D-60322 Frankfurt am Main (DE)**

(54) **Verfahren und Vorrichtung zur Datenübertragung**

(57)     Es werden ein Verfahren und eine Vorrichtung zur Datenübertragung beschrieben, bei dem ein Sender (7) Daten mittels einer Zeitsteuerung (9) zu festgelegten Sendezeitpunkten (14) aussendet und ein Empfänger (12) mittels einer Zeitsteuerung (9) während eines Empfangszeitfensters (15) zum Empfang der Daten angeschaltet wird. Gangunterschiede der Zeitsteuerungen (9) des Senders (7) und des Empfängers (12) werden berücksichtigt, wozu bei der Festlegung des Empfangszeitfensters (15) in dem Empfänger (12) die Temperatur des Senders (7, 10) berücksichtigt wird.

Fig. 2

EP 2 150 084 A2

**Beschreibung**

Die Erfindung betrifft ein Verfahren und eine Vorrichtung zur insbesondere drahtlosen Datenübertragung mit ggf. sogar batteriebetriebenen Sendern und/oder Empfängern, vorzugsweise einer Datenübertragung zur Verbrauchserfassung und/oder -auswertung. Entsprechend dem vorgeschlagenen Verfahren sendet mindestens ein Sender Daten in Form von Datenpaketen mittels einer Zeitsteuerung zu festgelegten Sendezeitpunkten aus. Mindestens ein Empfänger wird mittels einer Zeitsteuerung während eines Empfangszeitfensters zum Empfang der durch den Sender ausgesandten Daten bzw. Datenpakete angeschaltet, wobei der Sendezeitpunkt im Regelfall innerhalb des Empfangszeitfensters liegen soll und Gangunterschiede der Zeitsteuerungen des Senders und des Empfängers berücksichtigt werden.

Die Erfindung betrifft somit insbesondere ein Datenübertragungssystem, mit dem ein oder mehrere Sender regelmäßig Datenpakete an einen oder mehrere zugeordnete Empfänger übertragen. Die Sender verfügen jeweils über eine Zeitsteuerung, welche die Zeitpunkte der Datenaussendungen in bekannter Weise deterministisch bzw. pseudostochastisch festlegt. Die Empfänger verfügen ebenfalls über jeweils eine Zeitsteuerung, die es ihnen ermöglicht, die nominalen Soll-Sendezeitpunkte der zugeordneten Sender nach demselben Verfahren wie die Sender vorauszubestimmen.

Ein derartiges Datenübertragungssystem optimiert den Stromverbrauch der Empfänger, indem diese gezielt nur an den erwarteten, nominalen Sendezeitpunkten (Soll-Sendezeitpunkten) der zugeordneten Sender eingeschaltet werden, wobei das Empfangszeitfenster jeweils um eine Zeitreserve nach vorne und/oder hinten verlängert wird, um mögliche Gangabweichungen zwischen den Zeitsteuerungen der jeweiligen Sender und Empfänger seit der letzten Datenübertragung zu berücksichtigen. Damit sich die möglichen Gangabweichungen im Laufe der Zeit nicht soweit vergrößern, dass die Sendezeitpunkte und die Empfangszeitfenster auseinanderfallen, findet in solchen Datenübertragungssystemen häufig eine Synchronisation zwischen den Empfängern und den ihnen jeweils zugeordneten Sendern statt, welche den Betrieb der Empfänger auch über lange Zeiträume hinweg mit auf die Sendezeitpunkte abgestimmten Empfangszeitfenstern ermöglicht. Hierdurch lassen sich Datenübertragungssysteme auch mit batteriebetriebenen Empfängern realisieren.

In der Praxis werden derartige Datenübertragungssysteme beispielsweise in Systemen zur Verbrauchserfassung von Wärme, Kälte, Wasser, Gas oder Strom in Wohn- oder Gewerbegebäuden eingesetzt. Dazu werden typischerweise batteriebetriebene Verbrauchserfassungsgeräte verwendet, die regelmäßig per Funk Verbrauchswerte und ggf. andere Prozessdaten an als Empfänger dienende Datensammler im Funkreichweitenbereich übertragen. Bei den Verbrauchserfassungsgeräten sind aus Gründen der Wirtschaftlichkeit Batterielebensdauern von mehr als 10 Jahren zu erreichen. Die Datensammler selbst sind typischerweise auch batterieversorgt, um bei der Installation die Kosten für eine Verkabelung zur Netzversorgung zu sparen. Auch hier werden vergleichbare Batteriestandszeiten angestrebt. Darüber hinaus finden derartige Datenübertragungssysteme insbesondere im Rahmen von drahtlosen Sensornetzwerken und Empfängern von Zeitzeichensendern Anwendung. In der Beschreibungseinleitung der DE 199 05 316 A1 wird ein derartiges System als Stand der Technik beschrieben, bei dem zur Vermeidung von Mehrfachkollisionen mit einem anderen sendenden Verbrauchsmessgerät der Sendezeitpunkt des Senders stochastisch variiert wird, wobei als quasistatistische Einflussgröße die letzte, hochauflösend gemessene Temperatur des Wärmeträgermediums herangezogen werden kann. Dabei besteht jedoch das Problem, dass der Sendezeitpunkt aufgrund der statistischen Variation nicht vorhergesagt werden kann und die Empfänger dauerhaft Empfangsbereit bleiben müssen.

Für eine stromsparende Datenübertragung von Sendern zu Empfängern, insbesondere in drahtlosen Sensornetzwerken mit batteriebetriebenen Sendern und/oder Empfängern, schlägt die DE 199 05 316 A1 zur zeitlichen Synchronisation daher ein System vor, in dem Datenpakete von Sendern an Empfänger übertragen werden, wobei die Sendezeitpunkte durch die Sender so gewählt werden, dass sie von den Empfängern vorausberechnet werden können, indem auf Seiten des Empfängers der Algorithmus, die Zufallscodezahl und der Anfangszeitpunkt des pseudo-stochastischen Zufallsgenerators aller dem Empfänger zugeordneten Sender bekannt sind. Die Empfänger werden dann gezielt für das kurze Zeitintervall der Datenübertragung eingeschaltet und gehen auf Empfang. Bei der Berechnung des erwarteten nächsten Sendezeitpunkts wird der gemessene zeitliche Abstand der letzten und der vorletzten Aussendung des jeweiligen Senders durch einen Korrekturfaktor berücksichtigt. Die Empfangszeitfenster werden um Vorlauf- und Nachlauf-Toleranzzeiträume erweitert, um zwischenzeitlich entstandene Gangabweichungen von Sender- und Empfängeruhren abzufangen. In einer speziellen Variante wird vorgeschlagen, die Länge der Empfangszeitfenster abhängig vom zeitlichen Abstand zum letzten und vorletzten Datenempfang überproportional zu verlängern. Dies ermöglicht es dem Empfänger, das Zeitfenster für einen ersten Empfangsversuch zunächst relativ kurz zu halten und erst bei dem relativ seltenen Fall eines tatsächlichen Nichtempfangs das Zeitfenster des nächsten Empfangsversuchs so groß zu machen, dass die inzwischen akkumulierte Zeitabweichung zwischen Sender und Empfänger mit großer Sicherheit abgedeckt und der Sender wieder "eingefangen" wird.

Die DE 10 2005 056 932 A1 beschreibt den Effekt der Temperaturdrift auf die Zeitgeber der Sender und Empfänger in einem Funkübertragungssystem. Da sich die HF-Quarzfrequenz des Funksenders nicht sprunghaft verändert, sondern bei einer meist nur langsamen Temperaturänderung ein näherungsweise zeitlineares Verhalten aufweist, ist der Zusammenhang zwischen dem Zeitabstand seit dem letzten Empfang und der Änderung der Senderfrequenz zumindest näherungsweise linear. Der Zusammenhang zwischen der Abweichung des Sendezeitpunkts von seinem Nominalwert und dem tatsächlichen Zeitabstand des aktuellen Sendeereignisses von dem letzten Sendeereignis ist dagegen als Integral über die Taktfrequenz des Funksenders zumindest näherungsweise quadratisch. Der akkumulierte Zeitfehler seit dem letzten Funktelegrammempfang wird daher (als Mittelwert über die zeitlich linear angenommene Frequenzänderung) nur gerade der Hälfte des Zeitfehlers entsprechen, der sich aus dem Produkt aus Frequenzänderung und Zeitabstand seit dem letzten Empfang ergeben würde. Dies kann von der Empfangssteuerung des Empfängers berücksichtigt werden. Der Ansatz der DE 10 2005 056 932 A1 liegt also darin, die Temperaturabhängigkeit des Zeitfehlers zwischen den relativ kurzen Sendeintervallen zu vernachlässigen und ein zeitlineares Verhalten des Frequenzänderung des Schwingquarzes anzunehmen. Bei batteriebetriebenen Geräten wird ferner vorgeschlagen, den Sendezeitpunkt des Funksenders zu korrigieren.

Aus der US 5,771,180 ist zur Realisierung einer Real Time Clock auf Basis eines Oszillators bekannt, die Oszillatorsignale zu zählen und mit Korrekturwerten zu korrigieren, die in dem Speicher der Real Time Clock fest eingespeichert sind. Dazu wird die Temperatur des Oszillators gemessen und die Differenz zu einer Referenztemperatur gebildet. Auf Grundlage dieser Differenz wird dann der digitale Zähler, der die Schwingungen des Oszillators zählt, korrigiert. Bei der Bestimmung der Korrekturwerte wird der gesamte interessierende Temperaturbereich vermessen und der zu jeder Temperatur gehörende Korrekturwert in dem Speicher abgelegt.

In der EP 1 223 673 A2 ist ein ähnliches Verfahren bekannt, bei dem Korrekturwerte aufgrund einer bekannten temperaturabhängigen Fehlerkurve des Schwingquarzes bestimmt werden, wobei Symmetrieeigenschaften der Fehlerkurve ausgenutzt werden.

Die Korrektur der Schwingquarze selbst ist vergleichsweise aufwändig, da die Korrekturen ständig vorgenommen werden müssen. Dies ist insbesondere bei batteriebetriebenen Geräten nachteilig, da aufgrund der fortlaufend anzuwendenden Korrekturen in jedem Sender insgesamt eine beträchtliche Batterieleistung verbraucht wird, auch wenn die einzelnen Rechenschritte in den dafür vorgesehenen Prozessoren nur vergleichsweise wenig Energie benötigen.

Der in der DE 199 05 316 A1 beschriebene Stand der Technik sorgt durch die Messung des Zeitabstands zweier vorausgegangener Aussendungen und der Ermittlung eines Korrekturfaktors daraus zwar dafür, dass die Fertigungstoleranz und Alterung der zeitbestimmenden Komponenten, d.h. insbesondere der Schwingquarze, in den Sendern und Empfängern ausgeglichen werden. Kurzfristige Zeitabweichungen, die im Wesentlichen durch Schwankungen der Temperatur der zeitbestimmenden Bauteile in den Sendern und Empfängern verursacht werden, werden jedoch nur pauschal durch eine zum zeitlichen Abstand zum letzten erfolgreichen Empfang überproportionale Vergrößerung des Toleranz-Zeitraums berücksichtigt. Da die durch Temperaturänderungen in den Sendern und Empfängern hervorgerufene Uhrengangabweichung quantitativ und von dem Vorzeichen der Abweichung her an einem relativen Worst-Case, also der im Betriebstemperaturbereich der Sender und Empfänger maximal möglichen Gangabweichung und Gangabweichungsrichtung bemessen werden muss, bleibt jedoch Einsparpotential im Hinblick auf das Empfangszeitfenster des Empfängers und damit benötigter Empfänger-Betriebsenergie ungenutzt. Auch ein in der vorgenannten Druckschrift vorgeschlagener Empfängerpulsbetrieb während des Empfangszeitfensters verringert zwar den durchschnittlichen Stromverbrauch des Empfängers, erfordert aber im Datentelegramm einen zusätzlichen Preheader, der mindestens so lang sein muss wie eine Empfangspulsperiode.

Aufgabe der vorliegenden Erfindung ist es daher, die Stromverbrauchszeiten von insbesondere batteriebetriebenen Empfängern in einem Datenübertragungssystem weiter zu verkürzen, um bei gegebener Ladungsmenge, wie sie beispielsweise durch eine Batterie zur Verfügung gestellt wird, einen längeren Betrieb zu ermöglichen. Auch im Falle netzbetriebener Empfänger soll zur Stromeinsparung die benötigte Ladungsmenge reduziert werden. Dabei soll der Stromverbrauch der Sender nicht erhöht werden, wie dies beispielsweise im Falle eines Empfängerpulsbetriebs aufgrund der den Datenpaketen vorangestellten Preheader nötig wäre.

Diese Aufgabe wird mit den Merkmalen der Ansprüche 1 und 11 gelöst.

Bei dem eingangs beschriebenen Verfahren ist dazu insbesondere vorgesehen, dass bei der Festlegung des Empfangszeitfensters in dem Empfänger die Temperatur des Senders und damit des Zeitgebers der Zeitsteuerung mit berücksichtigt wird. Meist ist bei geschlossenen Datenübertragungssystemen, beispielsweise den bereits angesprochenen Sensornetzwerken zur Verbrauchserfassung, der Zeitgeber und/oder die Temperaturkennlinie des Zeitgebers der Zeitsteuerung in dem bzw. den Sender(n) bekannt. Durch Berücksichtigung der Temperatur des Senders kann in Kenntnis der Temperaturkennlinie des Senders das Empfangszeitfenster so verschoben werden, dass es optimal um den tatsächlichen Sendezeitpunkt herum liegt. Damit wird eine sinnvolle und optimale Wahl der zeitlichen Lage und Dauer des Empfangszeitfensters erreicht, indem in dem Empfänger die Temperatur des Senders bzw. der zeitbestimmenden Elemente der Zeitsteuerung des Senders mit berücksichtigt wird.

Entscheidend ist, dass durch Berücksichtigung der Temperatur des Senders beim Sendezeitpunkt der tatsächliche Sendezeitpunkt relativ zu der Zeitsteuerung des Empfängers in dem Empfänger genauer vorhergesagt werden kann. Damit ist eine bessere Abstimmung des Empfangszeitfensters auf den tatsächlichen Sendezeitpunkt möglich. Durch diese höhere Genauigkeit kann das Empfangszeitfenster im Vergleich zum Stand der Technik verkürzt werden, was zu der gewünschten Stromersparnis führt, die sich besonders bei batteriebetriebenen Empfängern auswirkt. Aber auch andernfalls trägt die erfindungsgemäße Lösung zum Stromsparen bei und verringert die Standby-Zeiten von netzbetriebenen Geräten, die in der Summe gesehen einen erheblichen Stromverbrauch ausmachen.

Erfindungsgemäß werden bei dem vorgeschlagenen Verfahren zur Datenübertragung also mehr Informationen berücksichtigt als beim Stand der Technik, indem in dem Empfänger zusätzlich eine Information oder Annahme über die Temperatur der Zeitsteuerung beziehungsweise deren Zeitgeber im Sender zur Festlegung des Empfangszeitfensters mit herangezogen werden. Durch Berücksichtigung der Temperatur im Sender ist es möglich, den Sendezeitpunkt jedes zugeordneten Senders genauer vorherzusagen und damit die zeitliche Lage und Dauer des erforderlichen Empfangszeitfensters optimal hierauf abzustimmen. Dadurch wird der Energieverbrauch im Empfänger minimiert.

Erfindungsgemäß ist es zusätzlich möglich, bei der Festlegung des Sendezeitpunkts auch die Temperatur des Senders zu berücksichtigen. Dadurch wird der Sendezeitpunkt so korrigiert, dass er dem in dem Übertragungsschema gewählten Sendezeitpunkt entspricht. Auch in diesem Falle ist es möglich, das Empfangszeitfenster gegenüber einem Fall zu verkürzen, in welchem die Temperatur des Senders nicht berücksichtigt wird. Damit wird auch in dieser Variante die Temperatur des Senders bei der Festlegung des Empfangszeitfensters in dem Empfänger berücksichtigt, wobei es grundsätzlich auch möglich ist, ausschließlich den Sendezeitpunkt aufgrund der Temperatur in dem Sender zu korrigieren.

In einer ersten einfachen, aber bereits wirkungsvollen Ausführungsform der vorliegenden Erfindung wird die Temperatur des Senders abhängig von dem ggf. typischen Montageort mit seinem typischen Umgebungstemperaturbereich abgeschätzt. In Kenntnis des Montageorts kann diese Abschätzung auch allein in dem Empfänger erfolgen, ohne dass die Temperatur in dem Sender tatsächlich gemessen werden muss. Für den Montageort entscheidend ist die Art des Gerätes, in welchem sich der Sender befindet. Heizkostenverteiler oder Wärmezähler befinden sich typischerweise in wärmeren Umgebungen als Kaltwasserzähler oder Gaszähler. Die durchschnittlichen Umgebungstemperaturen im Bereich solcher Zähler liegen als Erfahrungswerte vor und können daher dazu dienen, die Temperatur des Senders abhängig von dem typischen Montageort abzuschätzen.

Dabei können erfindungsgemäß auch Zusatzinformationen berücksichtigt werden, beispielsweise die Jahreszeit, die Außentemperatur oder der Raum eines Hauses, in dem der Sender angebracht ist. So ist es wahrscheinlich, dass in Heizkostenverteilern angeordnete Sender im Sommer keinen anderen Temperaturen ausgesetzt sind als die in einem vergleichbaren Raum angeordneten Empfänger. Dann können die Temperatur des Senders und des Empfängers als in etwa gleich angenommen werden. Bei hohen Außentemperaturen ist jedoch davon auszugehen, dass beispielsweise unter dem Dach oder in einer Dachgeschosswohnung angebrachte Sender wesentlich höhere Temperaturen aufweisen als ein im Erdgeschoss oder Keller eines Hauses angeordneter Empfänger. Mittels dieser oder vergleichbarer Überlegungen kann somit die typische Innentemperatur am Ort des Senders und des Empfängers abgeschätzt werden, um eine typische Temperaturdifferenz zwischen Sender und Empfänger festzustellen. Da zusätzliche Informationen, beispielsweise auch ob eine Heizung ein- oder ausgeschaltet ist, meist auf Seiten des Empfängers vorliegen, bietet es sich in diesem Fall an, die zusätzlichen Informationen auf Seiten des Empfängers zu nutzen, zumal sie dort auch kumuliert für alle Sender gleich verwendet werden können. Da der Montageort allgemein bekannt ist, kann er jedoch sowohl bei einer Anpassung des Empfangszeitfensters als auch bei einer Anpassung des Sendezeitpunkts auf einfache Weise berücksichtigt werden.

Bei der Abschätzung kann auch das typische Zeitverhalten der Umgebungstemperaturen mit berücksichtigt werden, um die zeitliche Lage und Dauer des jeweils nächsten Empfangszeitfensters zu berechnen. Von einem Heizkörper ist beispielsweise bekannt, dass ein Aufheizvorgang schneller von statten geht als ein Abkühlvorgang. Ein an einem Heizkörper installierter Funk-Heizkostenverteiler wird sich also bei Beginn eines Heizvorgangs typischerweise schneller erwärmen als er sich nach dem Abschalten des Heizkörpers (beispielsweise durch Abdrehen des Thermostatventils) abkühlt. Auch derartige Vorgänge können im Zusammenhang mit einer Information, ob eine Heizung ein- oder ausgeschaltet ist, erfindungsgemäß verwendet werden.

Eine genauere Information über die Temperatur des Senders kann erhalten werden, wenn die Temperatur des Senders und insbesondere des zeitbestimmenden Elements seiner Zeitsteuerung, d.h. typischerweise des Uhrenquarzes, gemessen wird. Die genaue Messung erlaubt eine genauere Abstimmung von Empfangszeitfenster und Sendezeitpunkt. Diese Variante ist besonders vorteilhaft, wenn in den Sendern aufgrund ihres Bestimmungszwecks ohnehin Temperatursensoren vorhanden sind. Dies ist zum Beispiel bei Funk-Heizkostenverteilern der Fall, die typischerweise jeweils einen heizkörper- und einen raumluftseitigen Temperatursensor aufweisen. Die Temperatur des Uhrenquarzes kann je nach Konstruktion und Anordnung der Temperaturfühler als gewichteter Mittelwert dieser beiden Sensortemperaturen abgeschätzt werden.

Alternativ können natürlich auch eigene Temperatursensoren angebracht werden, die speziell dazu eingerichtet sind, unmittelbar die Temperatur des zeitbestimmenden Elements in der Zeitsteuerung zu messen oder dieses einfach abzuschätzen. In einer ersten Variante können die Temperaturwerte also im Sender gemessen und beispielsweise an den Empfänger mit übertragen werden, der die Temperaturwerte dann bei der Anpassung des jeweils folgenden Empfangszeitfensters verwertet. Bei Heizkostenverteilern oder Wärmemengenzählern werden diese Temperaturwerte in der Regel ohnehin übertragen, so dass hierfür nicht einmal ein gesonderter Datenübertragungsaufwand anfällt. In einer zweiten Variante kann die Messung der Temperatur im Sender auch zu einer Anpassung der Sendezeitpunkte führen. Da dem Empfänger bekannt ist, dass eine temperaturabhängige Korrektur der Sendezeitpunkte in dem Sender stattfindet, können die Empfangszeitfenster insgesamt verkürzt und optimal um den nominalen Sendezeitpunkt herum angeordnet werden. Auch hierdurch wird in erheblichem Maße Energie im Empfänger gespart. Natürlich lassen sich diese beiden Varianten auch kombinieren.

Erfindungsgemäß kann zusätzlich die Temperatur des Empfängers gemessen werden, wobei insbesondere die Temperatur des zeitbestimmenden Elements dessen Zeitsteuerung, d.h. typischerweise des Uhrenquarzes, bestimmt wird. Auch die Temperaturinformation im Empfänger kann verwendet werden, um das Empfangszeitfenster optimal auf den Sendezeitpunkt einzurichten, d.h. gegebenenfalls zu verschieben. Aufgrund der größeren Genauigkeit kann auch bei Anwendung dieser Variante das Empfangszeitfenster weiter verkürzt werden, wodurch das Empfangszeitfenster noch präziser festgelegt werden kann. Insbesondere kann die Temperaturinformation im Empfänger verwendet werden, um den Temperaturunterschied zwischen Sender und Empfänger abzuschätzen, wenn die Temperaturinformationen des Senders mit vorliegen. Diese Variante ist auch dann vorteilhaft, wenn es beispielsweise aus Kostengründen nicht sinnvoll ist, in jedem Sender die Temperatur zu messen. Aus den Temperaturinformationen des Empfängers lassen sich Rückschlüsse auf die Temperatur des Senders und die insbesondere relevanten Temperaturdifferenzen zwischen Sender und Empfänger ziehen, ggf. in Kombination mit dem Montageort. Da in typischen Datenübertragungssystemen in der Regel wesentlich mehr Sender als Empfänger vorhanden sind, werden durch in dieser zuletzt erwähnten Variante die Gesamtkosten reduziert, insbesondere wenn in den Sendern gesonderte Temperatursensoren vorzusehen wären.

Sinnvollerweise erfolgt die Messung der Temperatur der Zeitsteuerungen in dem Sender und/oder Empfänger regelmäßig, d.h. periodisch in vorgegebenen Zeiträumen. Dadurch werden auch längerfristige systematische Einflüsse, die beispielsweise durch die mit dem Jahreszeitwechsel verbundenen Temperaturunterschiede im Zusammenhang stehen oder alterungsbedingte Einflüsse der Zeitgeber betreffen, kontinuierlich erfasst.

Sofern eine Temperaturkennlinie eines Zeitgebers nicht bekannt ist oder individuelle Abweichungen von einer allgemein gültigen Temperaturkennlinie erfasst werden sollen, ist es für einen besonders genauen Abgleich erfindungsgemäß möglich, die Temperaturkennlinie der Zeitsteuerung eines Senders und/oder Empfängers vorab durch Messungen zu bestimmen und zu parametrieren. Hierdurch lässt sich eine besonders genau Anpassung und Festlegung des Empfangszeitfensters erreichen.

Weiterhin ist es möglich, zur Berücksichtigung der Temperatur des Senders die Zeitabweichungen der tatsächlichen von den nominellen Sendezeitpunkten zu ermitteln. Dies kann erfindungsgemäß auch normiert auf den zeitlichen Abstand zum letzten empfangenen Datenpaket erfolgen. Da der wesentliche Einfluss bei den Verschiebungen der Datentelegramme die Temperatur der Sender und/oder Empfänger bzw. deren Zeitsteuerungen ist, wird durch die Berücksichtigung der tatsächlich gemessenen Abweichungen von den nominellen Sendezeitpunkten indirekt auch die Temperatur in dem Sender mit berücksichtigt.

Vorteilhaft kann es sein, eine Verteilungsdichtefunktion der Zeitabweichungen zu bestimmen und diese für das Festlegen eines Empfangszeitfensters zugrunde zu legen. Dazu kann unter Verwendung der Verteilungsdichtefunktion eine nominelle Empfangswahrscheinlichkeit festgelegt werden und ein Zeitfenster so groß bemessen werden, dass unter Zugrundelegung der Verteilungsdichtefunktion genau die gewünschte Empfangswahrscheinlichkeit erreicht wird. Das Zeitfenster kann dabei erfindungsgemäß minimal kurz gewählt werden, so dass der Bereich der höchsten Wahrscheinlichkeit in der Wahrscheinlichkeitsdichtefunktion für den Zeitpunkt und die Dauer des Zeitfensters ausgenutzt wird.

Um die Empfangswahrscheinlichkeit insgesamt zu erhöhen, kann nach einem oder vorzugsweise mehreren, bspw. zwei oder drei, erfolglosen Empfangsversuchen das Empfangszeitfenster für den folgenden Empfang auf zwei Unter-Empfangszeitfenster aufgeteilt werden, von denen eines zeitlich vor und eines zeitlich nach dem nominal vorgesehenen bzw. dem unter Anwendung des vorbeschriebenen Verfahrens anzuwendenden Empfangszeitfenster liegt. Ggf. ist es sinnvoll, einen kleinen Überlapp mit dem eigentlich vorzusehenden Empfangszeitfenster einzurichten, um keine zeitlichen Lücken zwischen den verschiedenen Empfangszeitfenstern entstehen zu lassen. Sofern in einem ersten Unter-Empfangszeitfenster ein erfolgreicher Empfang stattgefunden hat, kann die Anwendung des zweiten Unter-Empfangszeitfensters erfindungsgemäß unterbleiben.

Die vorgeschlagenen Unter-Empfangszeitfenster müssen in ihrer zeitlichen Länge gemeinsam nicht der Länge des nominellen Empfangszeitfensters entsprechen, sondern können individuell bspw. anhand einer gewünschten Wahrscheinlichkeit entsprechend der Verteilungsdichtefunktion festgelegt werden. Mit dieser Erfindungsvariante ist es möglich, trotz einer Verkürzung der Empfangszeitfenster auch bei nicht erfolgreichen Empfangsversuchen eine Datenübertragung zwischen einem speziellen Sender und dem Empfänger wieder herzustellen, wenn diese beispielsweise aufgrund unvorhergesehener Einflüsse auf den Zeitgeber des Senders und/oder des Empfängers nicht zustande gekommen ist.

Die Erfindung betrifft gemäß Anspruch 12 auch eine Vorrichtung zur Datenübertragung, insbesondere zur drahtlosen Datenübertragung mit ggf. sogar batteriebetriebenen Sendern und/oder Empfängern, mit mindestens einem Sender, welcher eine Zeitsteuerung zur Aussendung der Daten bzw. Datentelegramme zu festgelegten Sendezeitpunkten aufweist, und mit mindestens einem Empfänger, welcher eine Zeitsteuerung zum Anschalten des Empfängers während eines Empfangszeitfensters für den Empfang der durch den Sender ausgesendeten Daten bzw. Datenpakete aufweist. Um diese synchronisierte Datenübertragung aufrechtzuerhalten weist mindestens eine Zeitsteuerung eine Korrektureinrichtung zur Berücksichtigung von Gangunterschieden der Zeitsteuerungen des Senders und des Empfängers auf. Erfindungsgemäß ist diese Korrektureinrichtung dazu eingerichtet, bei der Festlegung des Empfangszeitfensters in dem Empfänger die Temperatur des Senders bzw. der zeitbestimmenden Elemente dessen Zeitsteuerung zu berücksichtigen. Insbesondere ist die Korrektureinrichtung des Senders und/oder des Empfängers zur Durchführung des vorbeschriebenen Verfahrens oder Teilen hiervon eingerichtet. Dazu kann die Korrekturvorrichtung einen programmtechnisch entsprechend ausgerüsteten Mikroprozessor aufweisen oder Zugriff auf einen solchen haben. Der Mikroprozessor kann dann beispielsweise in dem Sender oder Empfänger oder einer mit dem Sender bzw. Empfänger ausgerüsteten Einrichtung, wie einem Verbrauchserfassungsgerät, angeordnet sein.

Vorzugsweise kann an der Zeitsteuerung des Senders und/oder des Empfängers mindestens ein Temperatursensor vorgesehen sein. Dieser Sensor kann auch ein in der Einrichtung, welche den Sender oder Empfänger aufweist, angeordneter Temperatursensor sein, der Rückschlüsse auf die Temperatur der Zeitsteuerung bzw. deren zeitbestimmender Elemente zulässt. Eine typische Einrichtung hierfür ist ein Heizkostenverteiler.

Das Verfahren und die Vorrichtung eignen sich erfindungsgemäß besonders für die Verwendung bei Messgeräten zur Verbrauchs- bzw. Verbrauchskostenerfassung. Prinzipiell eignet es sich für alle drahtlosen Sendenetzwerke und Empfänger von Zeitzeichensendern.

Weitere Merkmale, Vorteile und Anwendungsmöglichkeiten der vorliegenden Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1 schematisch ein in einem Haus realisiertes Datenübertragungssystem gemäß der vorliegenden Erfindung;

Fig. 2 einen Sender und einen Empfänger des in Fig. 1 dargestellten Systems;

Fig. 3 die zeitliche Relation von Sendezeitpunkt und Empfangszeitfenster beim Stand der Technik und gemäß der vorliegenden Erfindung in Gegenüberstellung;

Fig. 4 eine typische Kennlinie für den Temperaturgang bei einem als zeitbestimmendes Element dienenden Uhrenquarz;

Fig.5 die Anordnung eines Empfangszeitfensters relativ zu einer Verteilungsdichtefunktion und

Fig. 6 die Anordnung zweier Unter-Empfangszeitfenster relativ zu einer Verteilungsdichtefunktion nach erfolglosen Empfangsversuchen.

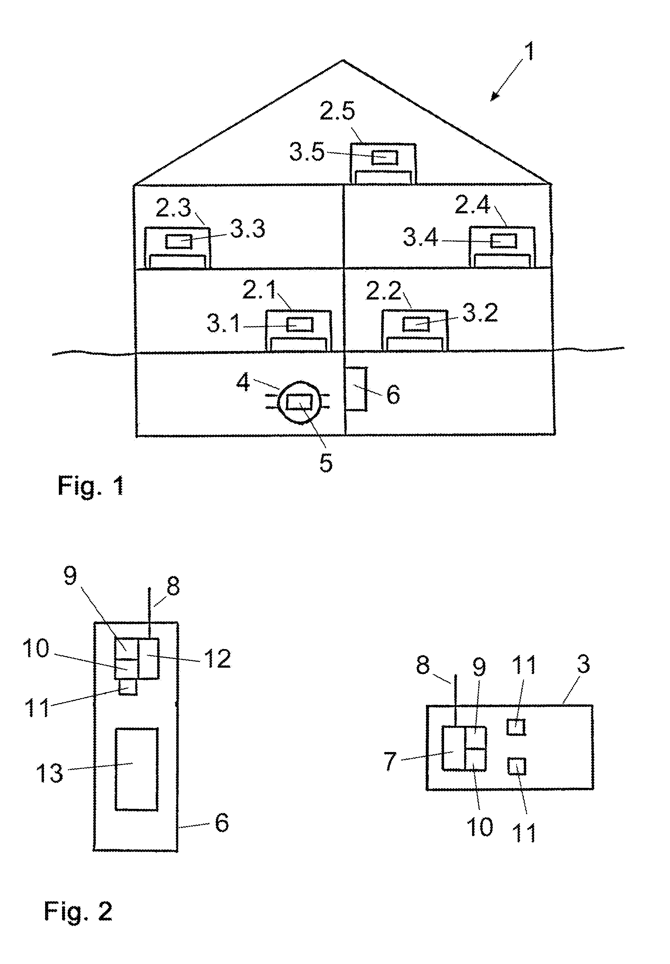

Fig. 1 stellt schematisch ein Haus 1 mit einem zur Verbrauchserfassung realisierten Datenübertragungssystem mit mehreren batteriebetriebenen Sendern und Empfängern dar. Die Sender und Empfänger sind in Verbrauchserfassungseinrichtungen integriert. Im Beispiel des dargestellten Hauses 1 sind dies an Heizkörpern 2.1 bis 2.5 angeordnete Heizkostenverteiler 3.1 bis 3.5. Die Heizkörper 2.1 und 2.2 befinden sich im Erdgeschoss, die Heizkörper 2.3 und 2.4 im ersten Stock und der Heizkörper 2.5 im Dachgeschoss des Hauses 1.

Im Keller des Hauses 1 findet sich ein Kaltwasseranschluss 4 mit einem Wasserzähler 5, der wie die Heizkostenverteiler 3 jeweils mit einem batteriebetriebenen Sender zum Aussenden der Verbrauchsdaten ausgestattet ist. In einem anderen Kellerraum ist ein Datensammler 6 vorgesehen, der einen Empfänger zum Empfang der durch die Sender der Heizkostenverteiler 3 und des Wasserzählers 5 ausgesendeten Daten bzw. Datentelegramme aufweist.

Als Beispiel für die an dem Datenübertragungssystem teilnehmenden Geräte sind in Fig. 2 ein Heizkostenverteiler 3 und der Datensammler 6 im Detail dargestellt. Der Heizkostenverteiler 3 weist einen Sender 7 mit einer Antenne 8 zur drahtlosen Übertragung von Datentelegrammen auf. Der Sender 7 ist mit einer Zeitsteuerung 9 ausgestattet, welche dazu dient, die Daten zu festgelegten Sendezeitpunkten auszusenden. Dazu weist die Zeitsteuerung 9 als zeitbestimmendes Element bzw. Zeitgeber einen Uhrenquarz 10 auf. Ferner sind in dem Heizkostenverteiler 3 Temperatursensoren 11 vorgesehen, welche die Raumlufttemperatur und die Heizkörperoberflächentemperatur messen, um daraus die für die Heizkostenerfassung wichtige Heizkörperübertemperatur als Differenz der Heizkörperoberflächentemperatur und der Raumlufttemperatur zu bestimmen.

Der Datensammler 6 weist einen Empfänger 12 auf, um die durch den Sender 7 ausgesandten Daten empfangen zu können. Dazu ist der Empfänger 12 mit einer dem Sender 7 vergleichbaren Zeitsteuerung 9 ausgestattet, die ebenso ein zeitbestimmendes Element 10, insbesondere einen Uhrenquarz, aufweist. Gemäß der hier beschriebenen Ausführungsformen der Erfindung ist an dem Uhrenquarz 10 des Empfängers 12 auch ein Temperatursensor 11 angeordnet, um die Temperatur des Uhrenquarzes 10 des Empfängers 12 zu messen.

Die Zeitsteuerung 9 des Empfängers 12 schaltet den Empfänger 12 während eines Empfangszeitfensters für den Empfang der Daten an, wobei die Zeitsteuerung 9 eine Korrektureinrichtung 13 aufweist bzw. mit dieser in Verbindung steht, welche den Gangunterschied der Zeitsteuerungen 9 des Senders 7 und des Empfängers 12 berücksichtigt. Die Korrektureinrichtung 13 kann beispielsweise in einen ohnehin in dem Datensammler 6 vorgesehenen Rechner, beispielsweise einen Mikroprozessor, integriert sein.

Erfindungsgemäß ist die Korrektureinrichtung 13 dazu eingerichtet, bei der Festlegung des Empfangszeitfensters in dem Empfänger 12 die Temperatur des Senders 7 bzw. des Uhrenquarzes 10 dessen Zeitsteuerung 9 zu berücksichtigen. Dadurch kann der Sendezeitpunkt für die Aussendung der Daten durch den Sender 7 des Heizkostenverteilers 3 genauer als im Stand der Technik vorhergesagt werden, der die Temperatur der Zeitsteuerung 9 bzw. des Uhrenquarzes 10 zum Zeitpunkt des Sendens nicht mit berücksichtigt.

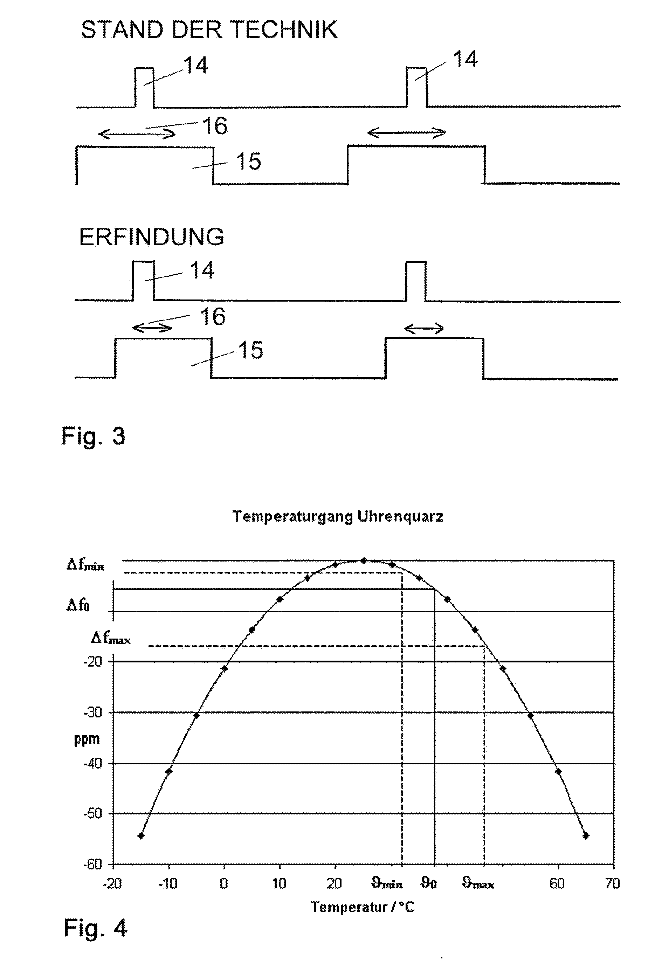

Im Stand der Technik ist es daher notwendig, die Empfangszeitfenster länger auszubilden, da die Ungenauigkeit über den tatsächlichen Sendezeitpunkt größer ist. Dies ist in Fig. 3 in einer Gegenüberstellung des Stands der Technik zu dem erfindungsgemäß vorgeschlagenen Verfahren dargestellt.

In dem oberen Teil der Fig. 3 sind die zeitliche Korrelation der Sendezeitpunkte 14 zu den Empfangszeitfenstern 15 schematisch dargestellt. Der Zeitgeber eines Senders veranlasst diesen zu dem nominalen Sendezeitpunkt 14 ein Datentelegramm einer bestimmten Länge auszusenden, die in der Darstellung durch die Breite des Sendezeitpunkts 14 angedeutet ist. Nach einem bestimmten Zeitintervall erfolgt eine zweite Aussendung zu einem weiteren Sendezeitpunkt 14. Die Sendezeitpunkte 14 werden durch eine Zeitsteuerung des Senders festgelegt, die insbesondere temperaturabhängig gewisse Schwankungen aufweist. Daher muss der Empfänger ein Empfangszeitfenster 15 öffnen, das gewisse temperaturbedingte Schwankungen berücksichtigt. Die auf Temperaturschwankungen basierende Unsicherheit über den Beginn des Sendezeitpunkts 14 sind durch den Pfeil 16 dargestellt. Da der Empfänger den Sendezeitpunkt 14 nicht genauer vorhersagen kann als durch den Pfeil 16 angezeigt, muss das Empfangszeitfenster 15 zeitlich so bemessen sein, dass ein Datentelegramm, das innerhalb der durch den Pfeil 16 dargestellten Schwankungsbreite des Sendezeitpunkts 14 ausgesendet wird, sicher durch den Empfänger empfangen werden kann.

Erfindungsgemäß wird nun die Temperatur des Senders 7 bzw. der Zeitsteuerung 9 mit dem zeitbestimmenden Element 10 bei dem Festlegen des Empfangszeitfensters 15 berücksichtigt. Da die Temperatur des Senders 7 zum Sendezeitpunkt 14 zumindest näherungsweise bekannt ist, verringert sich insgesamt die Unsicherheit über den Sendezeitpunkt 14, was sich in einem kürzeren Pfeil 16 widerspiegelt, der die mögliche Schwankungsbreite des Sendezeitpunkts 14 angibt. In dem dargestellten Beispiel, in welchem der Sender 7 eine der Scheitelpunkttemperatur der Kennlinie gemäß Fig. 4 aufweist, wurde ferner berücksichtigt, sich eine Temperaturänderung des Senders 7 ausgehend von dem Scheitelpunkt der in Fig. 4 dargestellten Kennlinie lediglich zu einer Verringerung der Taktfrequenz hin verschieben kann, so dass der Sendezeitpunkt 14 sich nur verzögern, nicht jedoch vorweggenommen werden kann. Daher muss unter Berücksichtigung dieser Zusatzinformation die insgesamt ohnehin kleinere Schwankung 16 des Sendezeitpunkts 14 nur im Hinblick auf eine spätere Datensendung berücksichtigt werden. Die durch den Pfeil 16 dargestellte Schwankungsbreite ist also erfindungsgemäß wesentlich kleiner als im Stand der Technik, so dass das Empfangszeitfenster 15 insgesamt wesentlich kürzer ausgebildet werden kann. Dies trägt zu einer erheblichen Energieeinsparung bei dem Empfänger 12 bei.

Nachfolgend werden verschiedene Varianten der vorliegenden Erfindung noch einmal ausführlich erläutert.

In einer ersten Ausgestaltung des erfindungsgemäßen Verfahrens wird bei der Bemessung des Empfangszeitfensters 15 die Art und der typische Montageort des Senders 7 mit seinem typischen Umgebungstemperaturbereich berücksichtigt. Beispielsweise in einem System zur drahtlosen Verbrauchserfassung in Gebäuden 1, wie es in Fig. 1 dargestellt ist, sind einem Datensammler 6 elektronische Heizkostenverteiler 3, Wasserzähler 5 sowie ggf. Gaszähler oder andere Zähler zugeordnet, die ihre Messdaten mittels Funk an den Datensammler 6 übersenden. Da die Heizkostenverteiler 3 direkt auf den Heizkörpern 2 montiert sind, sind sie einem größeren Temperaturbereich ausgesetzt, als die Wasserzähler 5 oder Gaszähler oder auch der im Keller angeordnete Empfänger 12. Dadurch kann der Uhrengangunterschied zwischen Sender 7 und Empfänger 12 und damit die Abweichung des nominellen bzw. Soll-Sendezeitpunkts 14 von dem tatsächlichen Sendezeitpunkt 14 innerhalb einer Sendeperiode bei den Heizkostenverteilern 3 größer werden als bei dem Wasserzählern 5 oder einem Gas- oder Stromzähler. In dem Empfänger 12 des Datensammlers 6 wird zur Berücksichtigung der möglichen Gangunterschiede bei der Inbetriebnahme des Systems die Information über die Art bzw. den Montageort des zu empfangenden Erfassungsgerätes gespeichert, so dass der Empfänger 12 bei der Berechnung der zeitlichen Lage und der Dauer des jeweils nächsten Empfangszeitfensters 15 für ein Datenpaket eines Wasseroder Gaszählers 5 ein kürzeres Zeitfenster vorsehen kann als bei einem erwarteten Datenpaket eines Heizkostenverteilers 3, das typischerweise stärkeren Schwankungen unterworfen ist. Durch die gegenüber einer unterschiedslosen Behandlung der verschiedenen Typen bzw. Montageorten von Erfassungsgeräten 3, 5 kann somit insgesamt die Empfangsbereitschaftszeit der Empfänger 12 reduziert werden. Durch Zusatzinformationen (beispielsweise Sommer, Winter oder räumliche Anordnung in dem Haus unter dem Dach oder im Erdgeschoss) können zusätzlich mittlere Annahmen über eine typische Temperatur gemacht werden, welche neben einer Verringerung der zeitlichen Länge eines Empfangszeitfensters 15 auch eine Verschiebung hin zu einem tatsächlichen Sendezeitpunkt 14 zur Folge haben können.

In Heizkostenverteilern 3 ist der Einsatz von 32,678 kHz-Uhrenquarzen als zeitbestimmenden Elementen 10 der Zeitsteuerungen 9 üblich. Von diesen Uhrenquarzen 10 ist eine parabelförmige Kennlinie der Schwingfrequenz über der Temperatur bekannt, wie sie in Fig. 4 dargestellt ist. Typischerweise liegt der Scheitelpunkt der Kennlinie bei etwa einer Scheitelpunkttemperatur von etwa 25° C. Die Schwingfrequenz verringert sich mit steigender sowie mit sinkender Temperatur. Wenn ein Heizkostenverteiler 3 beispielsweise alle ca. 15 Minuten ein Datenpaket aussendet, kann sich innerhalb einer Sendeperiode, d.h. dem Zeitraum zwischen einem Sendezeitpunkt 14 und dem darauffolgenden Sendezeitpunkt 14, die Quarzfrequenz bei einem Temperaturanstieg von 25° C auf 65° C, wie er im Fall einer Aufheizung eines Heizkörpers durchaus erfolgen kann, um 50 ppm verringern. Eine Abkühlung des Quarzes von 65° C auf 25° C wird umgekehrt mindestens eine Stunde dauern, so dass innerhalb der Sendeperiode von 15 Minuten höchstens ein Anstieg der Quarzfrequenz um 20 ppm zu erwarten ist. Somit muss für den Fall eines Temperaturanstiegs mit einer Verzögerung der Aussendung um bis zu 45 ms pro Sendeperiode gerechnet werden, bei einem Temperaturabfall hingegen nur mit einer um 18 ms verfrühten Aussendung gegenüber dem Fall einer gleichbleibenden Temperatur.

Das Empfangszeitfenster 15 wird in diesem Beispiel also so gewählt, dass es 18 ms vor dem ohne Temperaturänderung erwarteten (nominalen) Soll-Sendezeitpunkt beginnt und bei Nichtempfang 45 ms nach dem nominalen Sendezeitpunkt endet. Durch die allgemein gültige Berücksichtigung der typischen Umgebungstemperatur, im Falle eines Heizkostenverteilers 3 also des langsamen Abkühlens eines Heizkörpers 2, kann das Empfangszeitfenster 15 gegenüber einer herkömmlichen Betrachtung verkürzt werden und somit der durchschnittliche Energieverbrauch des Empfängers 12 erheblich gesenkt werden.

Gemäß einer anderen Variante der vorliegenden Erfindung können die Temperaturen der zeitbestimmenden Elemente 10 (Uhrenquarze) in den Sendern 7 und/oder den Empfängern 12 regelmäßig gemessen werden. Hierzu können, wie im Falle des Heizkostenverteilers 3, ohnehin verwendete Temperatursensoren 11 eingesetzt werden, die aufgrund ihrer Anordnung und typischer Erfahrungswerte beispielsweise durch eine gewichtete Mittelwertbildung eine gute Abschätzung für die Temperatur der Zeitsteuerung 9 mit dem Zeitgeber 10 (Uhrenquarz) ergeben. Im Falle eines Datensammlers 6, der typischerweise nicht mit einem Temperatursensor 11 ausgestattet ist, kann einen Temperatursensor 11 unmittelbar an dem Uhrenquarz 10 angeordnet werden.

Mit diesen Informationen sind diverse Korrekturen möglich. Zum einen kann die Zeitsteuerung 9 des Senders 7 aufgrund der bekannten Temperatur den Sendezeitpunkt 14 gemäß der bekannten Temperaturlinie (Fig. 4) der zeitbestimmenden Bauelemente 10 korrigieren. Dies ermöglicht es dem Empfänger 12, kürzere Empfangszeitfenster 15 zu wählen und somit Energie zu sparen.

Bevorzugt und wesentlich genauer ist jedoch eine alternative Verfahrensausgestaltung, bei der die erfassten Temperaturen der Zeitsteuerung 9 der Sender 7 mit zu dem Empfänger 12 und dessen Korrektureinrichtung 13 übertragen werden. Sie dienen dort dann als Basis für die Berechnungen der Länge und zeitlichen Verschiebung des jeweils nächsten Empfangszeitfensters 15 für den jeweiligen Sender 7.

Wenn in den Sendern 7 Uhrenquarze 10 mit der in Fig. 4 dargestellten parabolischen Temperaturkennlinie verwendet werden und beispielsweise im letzten empfangenen Datenpaket eines Senders 7 eine Quarztemperatur von 25° übermittelt wurde, ist klar, dass sich die Zeitbasis des Senders nicht beschleunigen, sondern nur verlangsamen kann. Deshalb braucht im Empfangszeitfenster 15 für den Sender 7 dieses Beispiels gegenüber dem Nominalsendezeitpunkt kein Vorlauf, sondern nur ein Nachlauf vorgesehen werden, wie dies in der unteren Darstellung von Fig. 3 bereits erläutert wurde. Mit Kenntnis der Art der Temperaturkennlinie der zeitbestimmenden Bauelemente 10 in den Sendern 7, der Kenntnis der Quarztemperatur $\vartheta_0$ zum Zeitpunkt der letzten empfangenen Aussendung und der Kenntnis der seit der letzten empfangenen Aussendung maximal möglichen Temperaturänderung ($\vartheta_{max}$ -$\vartheta_0$, $\vartheta_0$ -$\vartheta_{min}$) können die Empfänger aus den sich ergebenden relativen Quarzfrequenzabweichungen ($\Delta f_{min}$ bis $\Delta f_{max}$) gezielt die optimale Länge und die zeitliche Lage des Empfangszeitfensters 15 berechnen. Die entsprechenden Werte und Bereiche sind zur Veranschaulichung in Fig. 4 eingezeichnet.

Dabei ist es möglich, bei jedem Sender 7 den Frequenzgang des zeitbestimmenden Uhrenquarzes 10 über der Temperatur zum Beispiel bei der Fertigung individuell zu vermessen, beispielsweise durch eine Frequenzmessung bei 25° C und 60° C. Dadurch ist die genaue Lage der individuellen Temperaturkennlinie eines jeden Senders 7 bekannt und kann durch individuelle Parameter, zum Beispiel die Scheitelpunkt-Temperatur und die Steilheit, bei einem Uhrenquarz 10 beschrieben werden. Die so ermittelten, senderindividuellen Parameter werden entweder im jeweiligen Sender 7 gespeichert und bei der Korrektur des Sendezeitpunktes verrechnet oder vorzugsweise im Empfänger 12 gespeichert, der sie bei der Berechnung von Länge und zeitlicher Lage des Empfangszeitfensters 15 berücksichtigt. Die Speicherung und Berechnung kann in der Korrektureinrichtung 13 erfolgen. Es ist auch möglich, die Kennlinienparameter in dem Sender 7 zu speichern und in Datenpaketen des Senders 7 einmalig oder regelmäßig mit zu übertragen.

In einer weiteren Variante des vorgeschlagenen Verfahrens wird die Länge der Empfangszeitfenster 15 aus statistischen Angaben über die Abweichungen der tatsächlichen Sendezeitpunkte 14 von den nominellen Sendezeitpunkten 14 ermittelt. Es bietet sich an, diese Zeitabweichung jeweils auf den zeitlichen Abstand zum letzten empfangenen Datenpaket zu normieren. Die normierte zeitliche Abweichung $\Delta t$ ist dann

$$\Delta t = \frac{T_{ist} - T_{soll}}{T_{ist} - T_{ist-1}}$$

mit $T_{soll}$ als vorausberechnetem Soll-Empfangszeitpunkt, $T_{ist}$ als tatsächlichem Empfangszeitpunkt und $T_{ist-1}$ als vorletztem tatsächlichem Empfangszeitpunkt.

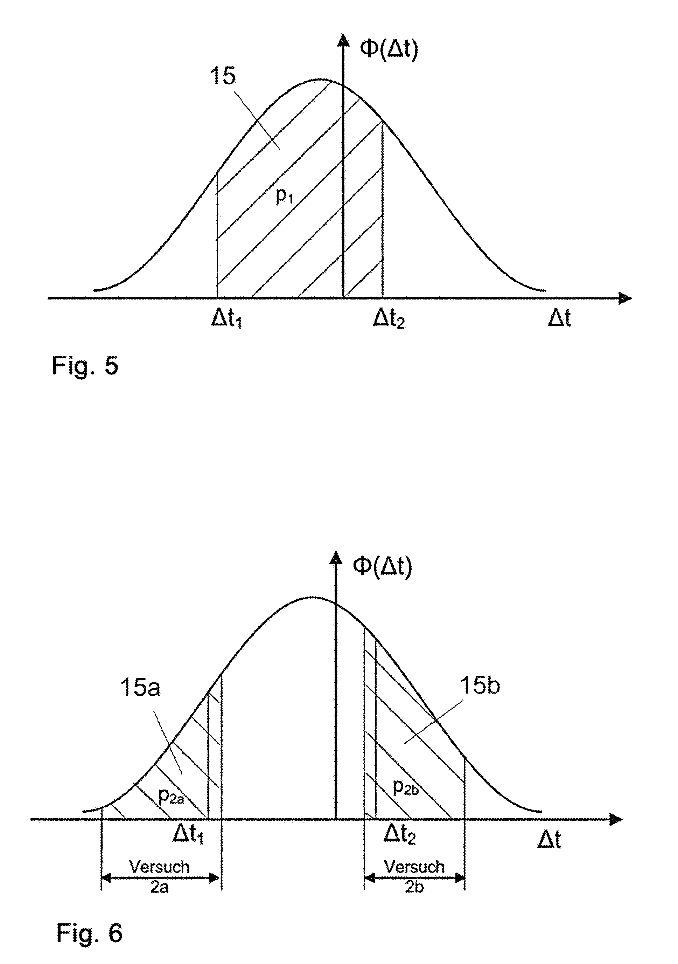

Aus einer großen Grundgesamtheit von ermittelten Werten für $\Delta t$ wird dann eine Verdichtungsdichtefunktion $\Phi(\Delta t)$ bestimmt, wie sie in Fig. 5 als Funktion der Zeitabweichung $\Delta t$ dargestellt ist. Das Empfangszeitfenster 15 wird nun so gewählt, dass es einem normierten Zeitintervall von $\Delta t_1$ bis $\Delta t_2$ entspricht. Die Wahrscheinlichkeit $p_1$, dass in diesem Empfangszeitfenster 15 tatsächlich ein Datenpaket gesendet wird, beträgt dann

$$p_1 = \int_{\Delta t_1}^{\Delta t_2} \phi(\Delta t) d\Delta t \ .$$

Für die Wahrscheinlichkeit $p_1$ wird dann ein Nennwert, beispielsweise 80%, vorgegeben und das normierte Zeitintervall von $\Delta t_1$ bis $\Delta t_2$ so gewählt, dass es minimal ist. Damit hat man ein für eine Empfangswahrscheinlichkeit $p_1$ von 80% optimal kurzes Empfangszeitfenster 15.

Umgekehrt besteht eine Wahrscheinlichkeit von $q_1$ = 1 - $p_1$, also in diesem Beispiel 20%, dass das Datenpaket nicht in dem Empfangszeitfenster 15 gesendet wird und somit auch nicht empfangen werden kann. Der tatsächliche Sendezeitpunkt 14 war also entweder vor oder nach dem gewählten Empfangszeitfenster 15, vorausgesetzt es gab keinen anderen Grund für den Nichtempfang, beispielsweise eine Störung auf dem Übertragungskanal.

Nach einer vorgegebenen Anzahl von fehlgeschlagenen Empfangsversuchen wird das Empfangszeitfenster 15 für das nächste Datenpaket in zwei Unter-Empfangszeitfenster 15a, 15b aufgeteilt, wie in Fig. 6 dargestellt. Das erste Unter-Empfangszeitfenster 15a stellt einen Versuch "2a" dar, der davon ausgeht, dass das in dem normalen Empfangszeitfenster 15 verpasste Datenpaket vor diesem Empfangszeitfenster 15 gesendet wurde. Das zweite Unter-Empfangszeitfenster 15b geht in einem weiteren Versuch "2b" davon aus, dass das in dem ursprünglichen Empfangszeitfenster 15 verpasste Datenpaket nach diesem Empfangszeitfenster 15 gesendet wurde. Ausgehend von der Wahrscheinlichkeitsverteilung $\Phi(\Delta t)$ wird jetzt ein Unter-Empfangszeitfenster 15a für den Versuch "2a" festgelegt, der mit der Vorgabe einer Empfangswahrscheinlichkeit $p_{2a}$ von beispielsweise 55% nach der oben beschriebenen Methode so optimiert wird, dass die Dauer des Unter-Empfangszeitfensters 15a minimal ist. Auf gleiche Weise wird bei der Dimensionierung des Unter-Empfangszeitfensters 15b für den Versuch "2b" vorgegangen. Dieser Versuch "2b" muss natürlich nur dann durchgeführt werden, wenn Versuch "2a" erfolglos geblieben ist. Durch das Rechnen mit der normierten Zeitabweichung $\Delta t$ wird automatisch berücksichtigt, dass seit dem letzten empfangenen Datenpaket bis zu der Durchführung der Versuche "2a" und "2b" ggf. weitere Sendeperiode vergangen sind, in denen sich die Uhrengangabweichungen aufintegriert haben können.

In dem obigen Zahlenbeispiel beträgt die Restwahrscheinlichkeit, dass das Datenpaket bei keinem der Versuche "1" in dem Empfangszeitfenster 15 (vgl. Fig. 5) sowie "2a" oder "2b" in den Empfangszeitfenstern 15a oder 15b (vgl. Fig. 6) empfangen wurde, nur etwa 4%. In diesem Fall kann zur Aufrechterhaltung der Synchronität zwischen Sender 7 und Empfänger 12 ein weiterer Empfangsversuch gestartet werden, bei dem die Unter-Empfangszeitfenster entsprechend weiter gefasst oder weiter entfernt von dem ursprünglichen Empfangszeitfenster 15 angeordnet werden.

Vorzugsweise wird die vorbeschriebene Aufteilung des Empfangszeitfensters 15 in Unter-Empfangszeitfenster 15a, 15b nicht bereits bei einem zweiten Empfangsversuch eines der zugeordneten Sender 7 durchgeführt, sondern erst wenn mehrere Empfangsversuche erfolglos geblieben sind. Dieses Vorgehen ist besonders sinnvoll bei Funkübertragungssystemen in einer Umgebung, in der viele andere systemkonforme und/oder systemfremde Sender dieselbe Arbeitsfrequenz benutzen. So kann es zu Nichtempfang von Datenpaketen aufgrund von Kollisionen kommen. Ein zeitliches Wegdriften des Sendezeitpunkts 14 gegenüber dem vom Empfänger 12 errechneten Soll-Sendezeitpunkt 14, der einem Soll-Empfangszeitpunkt entspricht, aufgrund von Uhrengangabweichungen kann hier erst als hinreichend sichere Ursache für den Nichtempfang betrachtet werden, wenn hinreichend häufig auch in einem nicht geteilten Empfangszeitfenster 15 Empfangsversuche unternommen wurden. Bei einer angenommenen Kollisions- bzw. Störwahrscheinlichkeit von 1% im Funkkanal ist nach zwei vergeblichen Empfangsversuchen die Wahrscheinlichkeit, dass bei den vergangenen zwei Versuchen eine Störung zum Nichtempfang führte und damit der nächste Sendezeitpunkt 14 nicht wesentlich vom Soll-Sendezeitpunkt 14 abweicht, 100 ppm. Diese geringe Wahrscheinlichkeit lässt es hinreichend sicher erscheinen, dass eine Aufteilung des Empfangszeitfensters 15 in Unter-Empfangszeitfenster 15a, 15b beim dritten Empfangsversuch angemessen ist.

Die zuvor beschriebenen statistischen Angaben zur Wahrscheinlichkeitsverteilung $\Phi(\Delta t)$ der Zeitabweichung $\Delta t$ können auch vorab ermittelt oder festgelegt und fest im Empfänger 12 bzw. dessen Korrektureinrichtung 13 gespeichert werden. Es ist ebenso möglich, diese statistischen Angaben während des laufenden Betriebs zu erheben und laufend zyklisch zu aktualisieren. Zu Beginn kann eine vorab ermittelte oder festgelegte Wahrscheinlichkeitsverteilung $\Phi(\Delta t)$ eingesetzt werden, die dann durch die im Datenübertragungssystem während des laufenden Betriebs ermittelte Statistik ersetzt wird. In einer Mischung der beiden Varianten kann beispielsweise während der Erhebungsphase der Statistik mit längeren Empfangszeitfenstern 15 gearbeitet werden und später auf die ermittelte Zeitabweichungsstatistik $\Phi(\Delta t)$ mit erfindungsgemäß verkürzten Empfangszeitfenstern 15 umgeschaltet werden.

Die statistischen Angaben zur Wahrscheinlichkeitsverteilung $\Phi(\Delta t)$ der Zeitabweichung können getrennt nach der Art der jeweiligen Sender 7 ermittelt und angewendet werden. Es werden beispielsweise in einem System zur Verbrauchserfassung getrennte Statistiken für Heizkostenverteiler 3, Wasserzähler 5, Gaszähler etc. verwendet. Ferner ist es möglich, diese Statistik senderindividuell zu erheben und anzuwenden.

Die zuvor ausführlich beschriebene Erfindung optimiert also den durchschnittlichen Empfängerenergieverbrauch gegenüber bekannten Systemen dadurch, dass die Prädiktion der Sendezeitpunkte 14 präziser mit weniger Toleranzen durchgeführt wird. Durch die kleine Toleranz werden bei gleicher Synchronitätssicherheit kürzere Empfangszeitfenster 15 ermöglicht. Die höhere Prädiktionspräzision wird durch die Erhebung und Verwendung weiterer Parameter und/oder statistischer Informationen erreicht.

Der wirtschaftliche Nutzen liegt darin, dass mit dem beschriebenen Datenübertragungssystem ein wesentlich längerer Batteriebetrieb der Empfänger 12 ermöglicht wird und damit gegebenenfalls vorgesehene Batteriewechsel seltener durchgeführt werden müssen. Alternativ können bei gegebenen Empfängereinsatzdauer kleinere oder weniger Batterien verwendet werden.

Ein weiterer Vorteil liegt darin, dass bei gegebener Empfängereinsatzdauer und Batteriekapazität jedem Empfänger 12 des Systems mehr Sender 7 zugeordnet werden können, da die Empfangszeitfenster 15 für jeden Sender 7 kürzer ausgebildet sind. Letzteres ist insbesondere dann wirtschaftlich vorteilhaft, wenn die Empfängerzahl bisher nicht durch die Reichweite der Datenübertragung, sondern durch die Batterieladung pro zugeordnetem Sender 7 bzw. die zeitliche Dauer der Empfangszeitfenster 12 bestimmt war. Ggf. wird durch Anwendung des erfindungsgemäß vorgeschlagenen Verfahrens und der dafür vorgesehenen Vorrichtung ein wirtschaftlich sinnvoller Batteriebetrieb der Empfänger 12 überhaupt erst ermöglicht.

**Bezugszeichenliste:**

| | | |
|---|---|---|
| 1 | | Haus |
| 2.1 bis 2.5 | | Heizkörper |
| 3.1 bis 3.5 | | Heizkostenverteiler |
| 4 | | Wasseranschluss |
| 5 | | Wasserzähler |
| 6 | | Datensammler |
| 7 | | Sender |
| 8 | | Antenne |
| 9 | | Zeitsteuerung |
| 10 | | Uhrenquarz, zeitbestimmendes Element |
| 11 | | Temperatursensor |
| 12 | | Empfänger |
| 13 | | Korrektureinrichtung |
| 14 | | Sendezeitpunkt |
| 15 | | Empfangszeitfenster |
| 15a, 15b | | Unter-Empfangszeitfenster |
| 16 | | Schwankung des Sendezeitpunkts |

$\Phi(\Delta t)$      Verteilungsdichtefunktion der Zeitabweichungen $\Delta t$

**Patentansprüche**

1. Verfahren zur Datenübertragung, bei dem ein Sender (7) Daten mittels einer Zeitsteuerung (9) zu festgelegten Sendezeitpunkten (14) aussendet und ein Empfänger (12) mittels einer Zeitsteuerung (9) während eines Empfangszeitfensters (15) zum Empfang der Daten angeschaltet wird, wobei Gangunterschiede der Zeitsteuerungen (9) des Senders (7) und des Empfängers (12) berücksichtigt werden, **dadurch gekennzeichnet, dass** bei der Festlegung des Empfangszeitfensters (15) in dem Empfänger (12) die Temperatur des Senders (7, 10) berücksichtigt wird.

2. Verfahren nach Anspruch 1, **dadurch gekennzeichnet, dass** bei der Festlegung des Sendezeitpunkts (14) die Temperatur des Senders (7, 10) berücksichtigt wird.

3. Verfahren nach Anspruch 1 oder 2, **dadurch gekennzeichnet, dass** die Temperatur des Senders (7, 10) abhängig von dem Montageort abgeschätzt wird.

4. Verfahren nach einem der vorhergehenden Ansprüche, **dadurch gekennzeichnet, dass** die Temperatur des Senders (7, 10) gemessen wird.

5. Verfahren nach einem der vorhergehenden Ansprüche, **dadurch gekennzeichnet, dass** die Temperatur des Empfängers (7, 10) gemessen wird.

6. Verfahren nach Anspruch 4 oder 5, **dadurch gekennzeichnet, dass** die Messung der Temperatur regelmäßig erfolgt.

7. Verfahren nach einem der vorhergehenden Ansprüche, **dadurch gekennzeichnet, dass** die Temperaturkennlinie der Zeitsteuerung (9) eines Senders (7) und/oder Empfängers (12) vorab durch Messungen bestimmt und parametriert wird.

8. Verfahren nach einem der vorhergehenden Ansprüche, **dadurch gekennzeichnet, dass** zur Berücksichtigung der Temperatur des Senders (7) die Zeitabweichungen der tatsächlichen von den nominellen Sendezeitpunkten (14) ermittelt werden.

9. Verfahren nach Anspruch 8, **dadurch gekennzeichnet, dass** eine Verteilungsdichtefunktion ($\Phi$) der Zeitabweichungen und hieraus ein Empfangszeitfenster (15) bestimmt wird.

10. Verfahren nach einem der vorhergehenden Ansprüche, **dadurch gekennzeichnet, dass** nach einem oder mehreren erfolglosen Empfangsversuchen das Empfangszeitfenster (15) für den folgenden Empfang auf zwei Unter-Empfangszeitfenster (15a, 15b) aufgeteilt wird, von denen eines zeitlich vor und eines zeitlich nach dem Empfangszeitfenster (15) liegt.

11. Vorrichtung zur Datenübertragung mit einem Sender (7), welcher eine Zeitsteuerung (9) zur Aussendung der Daten zu festgelegten Sendezeitpunkten (14) aufweist, und mit einem Empfänger (12), welcher eine Zeitsteuerung (9) zum Anschalten des Empfängers (12) während eines Empfangszeitfensters (15) für den Empfang der Daten aufweist, wobei mindestens eine Zeitsteuerung (9) eine Korrektureinrichtung (13) zur Berücksichtigung von Gangunterschieden der Zeitsteuerungen (9) des Senders (7) und des Empfängers (12) aufweist, **dadurch gekennzeichnet, dass** die Korrektureinrichtung (9) dazu eingerichtet ist, bei der Festlegung des Empfangszeitfensters (15) in dem Empfänger (12) die Temperatur des Senders (7) zu berücksichtigen.

12. Vorrichtung nach Anspruch 11, **dadurch gekennzeichnet, dass** an der Zeitsteuerung (9) des Senders (7) und/oder des Empfängers (12) ein Temperatursensor (11) angeordnet ist.

Fig. 1

Fig. 2

STAND DER TECHNIK

ERFINDUNG

Fig. 3

Temperaturgang Uhrenquarz

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19905316 A1
- DE 102005056932 A1
- US 5771180 A
- EP 1223673 A2